(19) Europäisches Patentamt
European Patent Office
Office européen des brevets

(11) EP 3 783 047 A1

(12) EUROPEAN PATENT APPLICATION

(43) Date of publication:
**24.02.2021 Bulletin 2021/08**

(51) Int Cl.:
***C08G 65/40*** *(2006.01)*

(21) Application number: **19192595.7**

(22) Date of filing: **20.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Solvay Specialty Polymers USA, LLC.**
**Alpharetta, GA 30005-3914 (US)**

(72) Inventor: **LOUIS, Chantal**
**Alpharetta, GA 30005 (US)**

(74) Representative: **Fiorucci, Hélène**
**Solvay S.A.**
**Rue de Ransbeek, 310**
**1120 Bruxelles (BE)**

(54) **PEEK-PEODEK COPOLYMER AND METHOD OF MAKING THE COPOLYMER**

(57) A PEEK-PEoDEK copolymer having $R_{PEEK}$ and $R_{PEoDEK}$ repeat units in a molar ratio $R_{PEEK}/R_{PEoDEK}$ ranging from 95/5 to 70/30, a method of making the PEEK-PEoDEK copolymer and the polymer composition including the PEEK-PEoDEK copolymer, at least one reinforcing filler, at least one additive, or a combination thereof, shaped articles including the polymer composition, polymer-metal junctions including the polymer composition. Also described are methods of making the polymer composition, methods of making the shaped articles, and methods of making the polymer-metal junctions.

EP 3 783 047 A1

## Description

### FIELD OF THE INVENTION

The present invention relates to PEEK-PEoDEK copolymers, a method of making the PEEK-PEoDEK copolymers, polymer compositions including the PEEK-PEoDEK copolymers, shaped articles including the polymer compositions, and associated methods.

### BACKGROUND

Poly(aryl ether ketone) polymers (PAEK), such as poly(ether ether ketone) polymers (PEEK) having -Ph-O-Ph-C(O)-Ph-O- characteristic unit (with -Ph- being a 1,4-phenylene group), are known for their high temperature performance and excellent chemical resistance; however, because of their melting temperatures ($T_m$) which are generally too high, their processing temperatures require costlier, energy-intensive processing. Their high melting temperatures ($T_m$) can also result in polymers being unstable during processing, especially when the polymers must be kept at a temperature above or just below their melting temperature for extended periods of time, such as in extrusion molding, injection molding and even in selective laser sintering processing.

Accordingly, a need exists for new PAEK polymers that can be reliably processed at lower temperatures, thanks to their lowered melting temperature, but which retain their technical properties, notably their chemical resistance and mechanical properties (when compared with conventional PAEK polymers), because retaining useful significant crystallinity fraction, possessing outstanding dielectric performances, including notably dissipation factor at 2.4 GHz of less than 0.0025, as required for use in advanced electronic parts.

Among approaches for addressing these conflicting requirements, use has been made of the introduction into PEEK polymer structure of modifying monomers, having the effect of lowering melting point, while maintaining performances, as mentioned above. Among these approaches, copolymers including PEDEK units of formula: -Ph-Ph-O-Ph-C(O)-Ph-, with -Ph- being a 1,4-phenylene unit, have been described.

The present invention relates to PAEK polymers comprising PEEK units and PEoDEK units of formula -O-*o,o'*PhPh-O-Ph-C(O)-Ph- (with *o* being *ortho* and -*o,o'*PhPh- being a 2,2'-biphenyl unit; and -Ph- being a 1,4-phenylene unit), possessing the above described combination of advantageous features, i.e. reduced melting point over PEEK materials, and increased crystallinity delivering outstanding mechanical properties, combined with improved thermal stability and dielectric performances.

### DESCRIPTION OF EMBODIMENTS

The present invention relates to PEEK-PEoDEK copolymers delivering improved properties, to a method of making these PEEK-PEoDEK copolymers having $R_{PEEK}$ and $R_{PEoDEK}$ repeat units in a molar ratio $R_{PEEK}/R_{PEoDEK}$ ranging from 95/5 to 70/30, a polymer composition including the PEEK-PEoDEK copolymer and at least one reinforcing filler, at least one additive, or a combination thereof. Also described are methods of making the polymer composition, and shaped articles including the polymer composition.

More particularly, the invention pertains to a PEEK-PEoDEK copolymer of comprising at least 50 mol %, collectively, of repeat units ($R_{PEEK}$) and repeat units ($R_{PEoDEK}$), relative to the total number of repeat units in the PEEK-PEoDEK copolymer, wherein :

(a) repeat units ($R_{PEEK}$) are repeat units of formula :

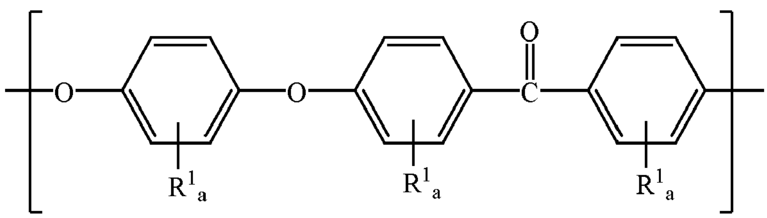

(A),

and

(b) repeat units ($R_{PEoDEK}$) are repeat units of formula (B) :

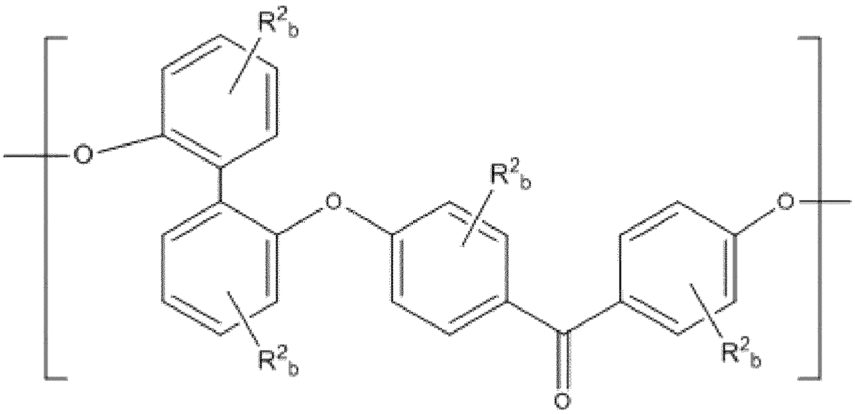

(B),

wherein :

each $R^1$ and $R^2$, equal to or different from each other, is independently at each occurrence selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium, each a and b is independently selected from the group consisting of integers ranging from 0 to 4, and

the PEEK-PEoDEK copolymer comprises the repeat units $R_{PEEK}$ and $R_{PEoDEK}$ in a molar ratio $R_{PEEK}/R_{PEoDEK}$ ranging from 95/5 to 70/30.

The Applicant has surprisingly found that the PEEK-PEoDEK copolymers of the present invention are able to deliver the particularly advantageous combination of properties mentioned above, i.e. reduced melting point (enabling lower temperature processing), outstanding mechanical properties, and dielectric properties (with dissipation factor at 2.4 GHz of less than 0.0025).

The PEEK-PEoDEK copolymers of the present invention are manufactured by a specific method which is another object of the present invention and which comprises the condensation of at least one difluoro-compound with a mixture of at least two di-hydroxy compounds, in a solvent comprising diphenylsulfone as the condensation solvent, whereas the polycondensation is terminated (or stopped) using at least one end-capping agent, followed by a specific work-up sequence. Accordingly, the invention pertains to a method of making a PEEK-PEoDEK copolymer, as described above, comprising causing at least one difluoro-compound of formula (C):

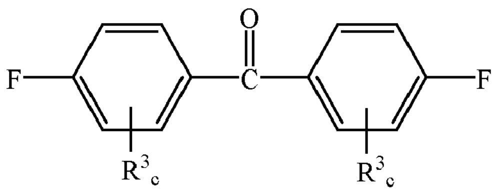

(C)

to react via (poly)condensation with a mixture comprising at least the di-hydroxy compounds of formulas (D) and (E):

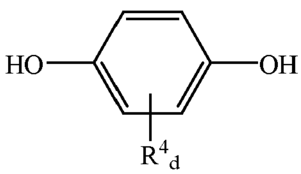

(D)

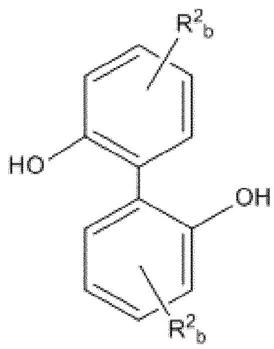

(E)

in a molar ratio (D)/(E) ranging from 95/5 to 70/30,
the mixture optionally further comprising an end-capping agent,
wherein each $R^3$, $R^4$, and $R^5$, equal to or different from each other, is independently at each occurrence selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium, and each c, d, and e is independently selected from the group consisting of integers ranging from 0 to 4,
at a temperature of 150 to 340°C,
in the presence of a base,
in a solvent comprising diphenyl sulfone; and

- optionally terminating the (poly)condensation reaction by addition of a terminating agent, so as to obtain a product mixture.

In the present application:

- any description, even though described in relation to a specific embodiment, is applicable to and interchangeable with other embodiments of the present disclosure;
- where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components; any element or component recited in a list of elements or components may be omitted from such list; and
- any recitation herein of numerical ranges by endpoints includes all numbers subsumed within the recited ranges as well as the endpoints of the range and equivalents.

**PEEK-PEoDEK Copolymer**

As used herein, a "PEEK-PEoDEK copolymer" comprises at least 50 mol. %, collectively, of repeat units ($R_{PEEK}$) and repeat units ($R_{PEoDEK}$), relative to the total number of moles of repeat units in the PEEK-PEoDEK copolymer. In some embodiments, the PEEK-PEoDEK copolymer comprises at least 60 mol. %, at least 70 mol. %, at least 80 mol. %, at least 90 mol. %, at least 95 mol. %, and most preferably at least 99 mol. % of repeat units ($R_{PEEK}$) and ($R_{PEoDEK}$), relative to the total number of moles of repeat units in the PEEK-PEoDEK copolymer. Repeat unit ($R_{PEEK}$) is represented by formula:

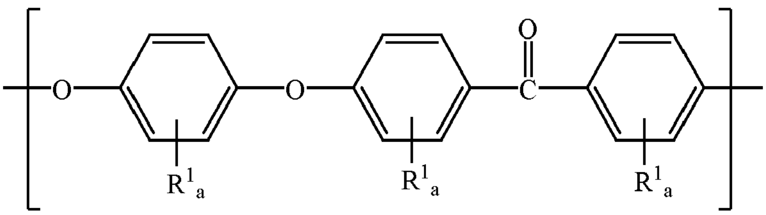
(A),

and repeat unit ($R_{PEoDEK}$) is represented by formula :

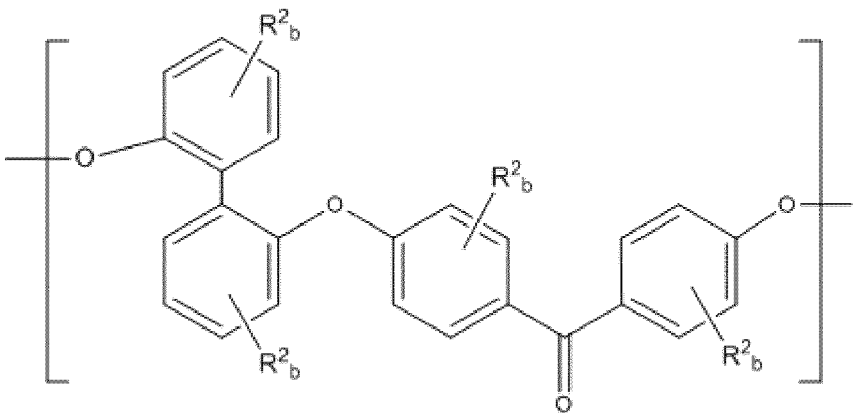

(B),

where each $R^1$ and $R^2$, equal to or different from each other, is independently at each occurrence selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and

each a and b is independently selected from the group consisting of integers ranging from 0 to 4.

In some preferred embodiments, each a is zero, such that the repeat units ($R_{PEEK}$) are repeat units of formula:

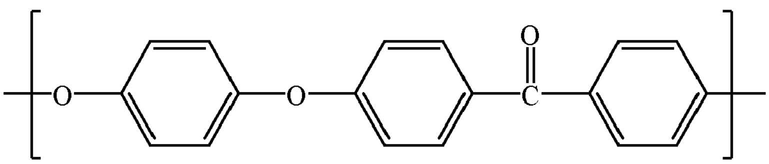

(A-1).

In some preferred embodiments, each b is zero, such that the repeat units ($R_{PEoDEK}$) are repeat units of formula:

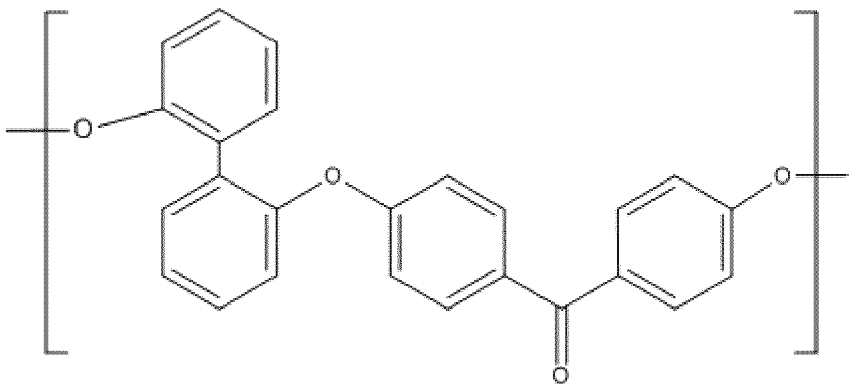

(B-1).

Preferably, repeat units ($R_{PEEK}$) are repeat units of formula (A-1), and repeat units ($R_{PEoDEK}$) are repeat units of formula (B-1).

The PEEK-PEoDEK copolymer of the present invention may additionally comprise repeat units ($R_{PAEK}$) different from repeat units ($R_{PEEK}$) and ($R_{PEoDEK}$), as above detailed. In such case, the amount of repeat units ($R_{PAEK}$) can be comprised between 0.1 and less than 50 mol. %, preferably less than 10 mol. %, more preferably less than 5 mol. %, most preferably less than 2 mol. %, with respect to the total number of moles of repeat units of PEEK-PEoDEK copolymer.

When repeat units ($R_{PAEK}$) different from repeat units ($R_{PEEK}$) and ($R_{PEoDEK}$) are present in the PEEK-PEoDEK copolymer of the present invention, these repeat units ($R_{PAEK}$) different from units units ($R_{PEEK}$) and ($R_{PEoDEK}$), as described above, generally comply with any of the following formulae (K-A) to (K-M) herein below:

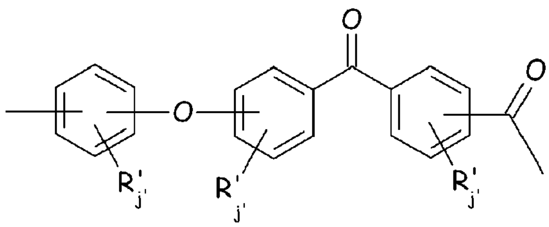

(K-A)

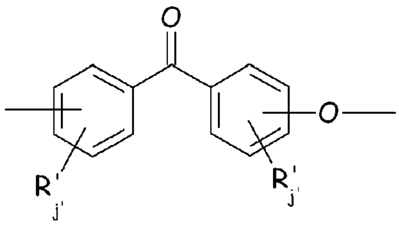

(K-B)

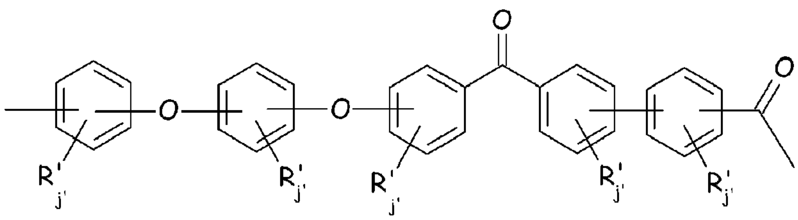

(K-C)

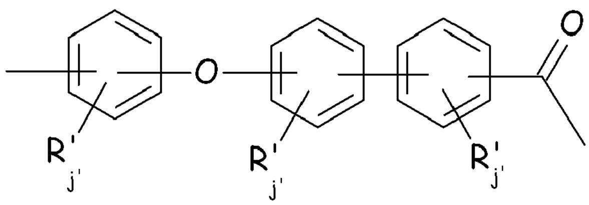

(K-D)

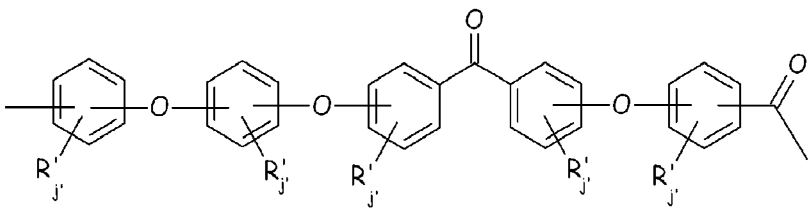

(K-E)

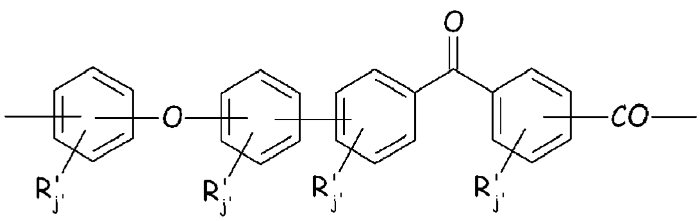

(K-F)

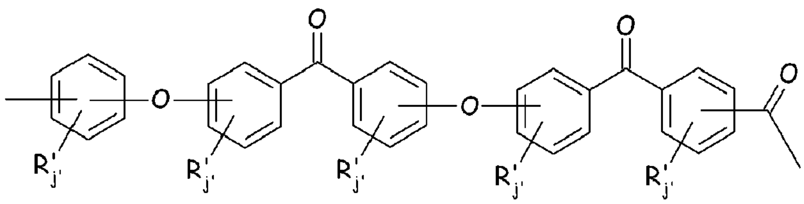

(K-G)

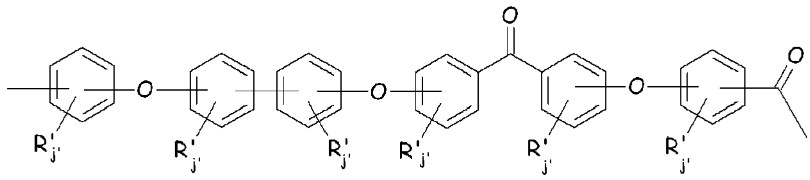

(K-H)

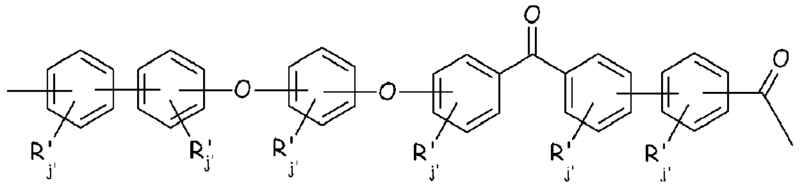

(K-I)

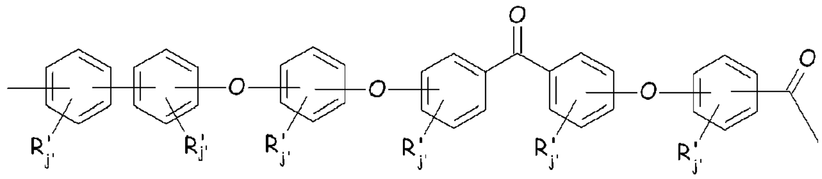

(K-J)

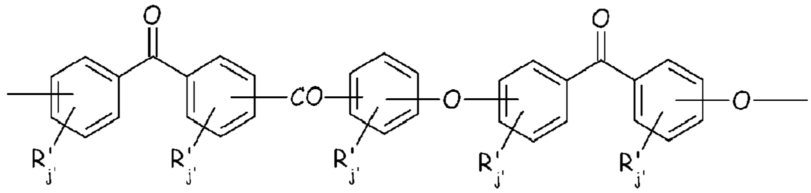

(K-K)

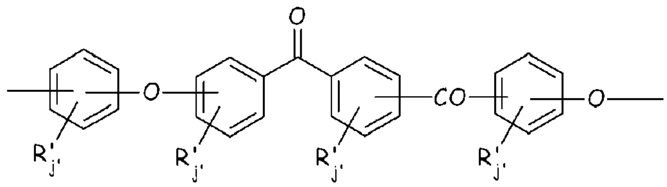

(K-L)

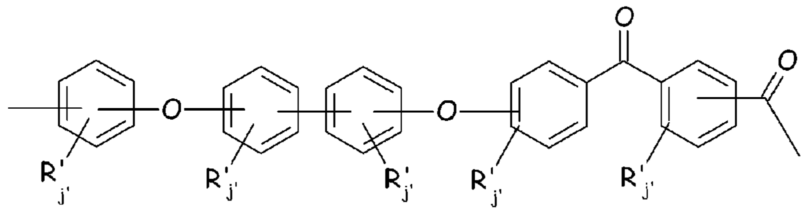

(K-M)

wherein in each of formulae (K-A) to (K-M) above, each of R', equal to or different from each other, is independently selected at each occurrence from a $C_1$-$C_{12}$ group optionally comprising one or more than one heteroatoms; sulfonic acid and sulfonate groups; phosphonic acid and phosphonate groups; amine and quaternary ammonium groups; and each of j', equal to or different from each other, is independently selected at each occurrence from 0 and an integer of 1 to 4, preferably j' being equal to zero.

It is nevertheless generally preferred for the PEEK-PEoDEK copolymer of the present invention to be essentially composed of repeat units ($R_{PEEK}$) and ($R_{PEoDEK}$), as above detailed. Thus, in some preferred embodiments, the PEEK-PEoDEK copolymer consists essentially of repeat units $R_{PEEK}$ and $R_{PEoDEK}$. As used herein, the expression "consists essentially of repeat units $R_{PEEK}$ and $R_{PEoDEK}$" means that any additional repeat unit different from repeat units $R_{PEEK}$ and $R_{PEoDEK}$, as above detailed, may be present in the PEEK-PEoDEK copolymer in amount of at most 2 mol. %, at most 1 mol.% or at most 0.5 mol.%, relative to the total number of moles of repeat units in the PEEK-PEoDEK copolymer, and so as not to substantially alter the advantageous properties of the PEEK-PEoDEK copolymer.

Repeat units $R_{PEEK}$ and $R_{PEoDEK}$ are present in the PEEK-PEoDEK copolymer in a $R_{PEEK}/R_{PEoDEK}$ molar ratio ranging from 95/5 to 70/30, preferably from 90/10 to 72/28, more preferably between 85/15 and 74/26, such as in molar

ratios of about 95/5, of about 90/10, of about 85/15, of about 80/20, of about 75/25 or of about 70/30.

In some embodiments, the PEEK-PEoDEK copolymer presents a dissipation factor (Df) at 2.4 GHz of less than 0.0025, as measured according to ASTM D2520 (2.4 GHz).

In some embodiments, the PEEK-PEoDEK copolymer presents a dissipation factor (Df) at 1 kHz of less than or equal to 0.0010, as measured according to ASTM D2520 (1 kHz).

In some embodiments, the PEEK-PEoDEK copolymer presents a dissipation factor (Df) at 1 MHz of less than 0.0020, as measured according to ASTM D2520 (1 MHz).

In some embodiments, the PEEK-PEoDEK copolymer has a melting temperature (Tm) of less than or equal to 340°C, preferably less than or equal to 335°C. The melting temperatures described herein are measured as the peak temperature of the melting endotherm on the second heat scan in a differential scanning calorimeter (DSC) according to ASTM D3418-03 and E794-06, and using heating and cooling rates of 20°C/min.

In some embodiments, the PEEK-PEoDEK copolymer has as heat of fusion ($\Delta H$) of at least 1 J/g, preferably at least 5 J/g, at least 10 J/g, at least 15 J/g, or at least 18 J/g. The heats of fusion described herein are determined as the area under the melting endotherm on the second heat scan in a differential scanning calorimeter (DSC) according to ASTM D3418-03 and E793-06, with heating and cooling rates of 20°C/min. In some aspects, the PEEK-PEoDEK copolymer has as heat of fusion ($\Delta H$) of at most 65 J/g, preferably at most 60 J/g.

In some embodiments, the PEEK-PEoDEK copolymer exhibits a tensile modulus (Young modulus) of at least 450 ksi, preferably at least 475 ksi as measured according to ASTM D638 at room temperature on specimens compression molded as described in the examples.

The PEEK-PEoDEK copolymer presents a solubility below 0.2 wt% in N-methylpyrrolidone, (NMP), N,N-dimethyl acetamide (DMAc) or N,N-dimethylformamide (DMF) at temperature up to 150 °C. The PEEK-PEoDEK copolymer is essentially insoluble in these solvents.

Depending upon the final performances which are required, it may be beneficial to select PEEK-PEoDEK copolymer possessing units $R_{PEEK}$ and $R_{PEoDEK}$ in a $R_{PEEK}/R_{PEoDEK}$ molar ratio ranging from 95/5 to 80/20, when targeting PEEK-PEoDEK copolymers possessing a melting temperature (Tm) of less than or equal to 340°C, preferably of less than or equal to 335°C, a heat of fusion of at least 25 J/g, a tensile strength at yield of at least 13500 psi and a tensile modulus (Young modulus) of at least 530 ksi, tensile properties being measured according to ASTM D638 at room temperature on specimens compression molded as described in the examples.

According to other embodiment's, it may be beneficial to select PEEK-PEoDEK copolymer possessing units $R_{PEEK}$ and $R_{PEoDEK}$ in a $R_{PEEK}/R_{PEoDEK}$ molar ratio ranging from 75/25 to 70/30, when targeting PEEK-PEoDEK copolymers possessing a melting temperature (Tm) of less than 305°C, preferably of less than or equal to 304°C, a heat of fusion of at least 1 J/g, and a tensile modulus (Young modulus) of at least 530 ksi as measured according to ASTM D638 at room temperature.

In some embodiments, the PEEK-PEoDEK copolymer has a glass transition temperature (Tg) of less than or equal to 165°C, preferably less than or equal to 160°C, less than or equal to 155°C, or less than or equal to 150°C as measured in a differential scanning calorimeter (DSC) according to ASTM D3418-03 and E1356-03.

Depending upon the requirements, the PEEK-PEoDEK of the invention may be manufactured with higher or lower molecular weight, so as to tune molten viscosity in a very wide range. In some embodiments, the PEEK-PEoDEK copolymer may have a melt viscosity (MV) as measured according to ASTM D3835 at 410°C, 46.3 $s^{-1}$ of at least 0.05 $kN/m^2$, more preferably at least 0.10 $kN/m^2$ and most preferably at least 0.20 $kN/m^2$.

In some embodiments, the PEEK-PEoDEK copolymer has a melt viscosity (MV) as measured according to ASTM D3835 at 410°C, 46.3 $s^{-1}$ of at most 5.0 $kN/m^2$, more preferably at most 4.5 $kN/m^2$, most preferably at most 4.0 $kN/m^2$, even most preferably at most 3.8 $kN/m^2$.

Generally, for complying with requirements of low viscosity processing, the PEEK-PEoDEK copolymer may be provided with a melt viscosity (MV) as measured according to ASTM D3835 at 410°C, 46.3 $s^{-1}$ of preferably at least 0.05 $kN/m^2$ and preferably at most 0.40 $kN/m^2$.

Particularly beneficial for use in injection molding or fiber impregnation are PEEK-PEoDEK copolymers having a melt viscosity (MV) as measured according to ASTM D3835 at 410°C, 46.3 $s^{-1}$ of preferably at least 0.05 $kN/m^2$ and preferably at most 0.40 $kN/m^2$ and most preferably of about 0.30 $kN/m^2$.

Particularly beneficial for use in extrusion, compression molding and selective laser sintering are PEEK-PEoDEK copolymers having a melt viscosity (MV) as measured according to ASTM D3835 at 410°C, 46.3 $s^{-1}$ of preferably at least 0.50 $kN/m^2$ and preferably at most 2.00 $kN/m^2$ and most preferably of about 1.30 $kN/m^2$.

Otherwise, for complying with requirements of high viscosity processing, the PEEK-PEoDEK copolymer may be provided with a melt viscosity (MV) as measured according to ASTM D3835 at 410°C, 46.3 $s^{-1}$ of preferably at least 1.00 $kN/m^2$ and preferably at most 3.00 $kN/m^2$.

Particularly beneficial for use in some extrusion applications are PEEK-PEoDEK copolymers having a melt viscosity (MV) as measured according to ASTM D3835 at 410°C, 46.3 $s^{-1}$ of preferably at least 1.00 $kN/m^2$ and preferably at most 3.00 $kN/m^2$ and most preferably of at least 1.20 $kN/m^2$ and of at most 2.50 $kN/m^2$.

**Method of Making the PEEK-PEoDEK Copolymer**

The method of making a PEEK-PEoDEK copolymer of the present invention comprises reacting at least one difluoro-compound of formula (C):

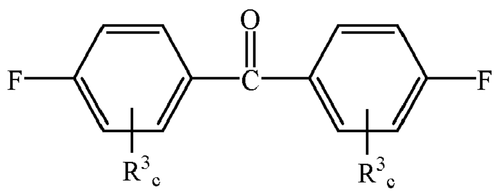

(C)

with a mixture comprising at least the di-hydroxy compounds of formulas (D) and (E):

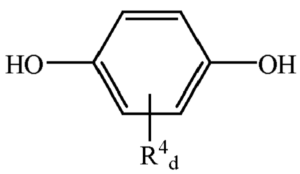

(D)

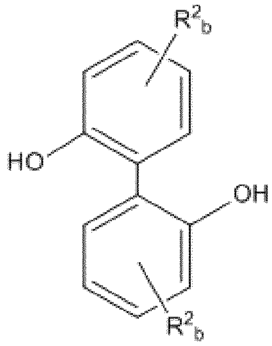

(E)

in a molar ratio (D)/(E) ranging from 95/5 to 70/30, wherein $R^3$, $R^4$, and $R^5$, have the meaning specified above.

The (poly)condensation reaction may be carried out with a slight excess of difluoro-compound of formula (C), that is to say that the molar ratio (C)/(D)+(E) is ≥ 1.005, preferably ≥ 1.008, more preferably ≥ 1.010, even more preferably ≥ 1.015, and each c, d, and e is independently selected from the group consisting of integers ranging from 0 to 4, in a polar organic solvent in the presence of a base, such as, for example, $Na_2CO_3$, $K_2CO_3$, or a combination thereof. Preferably each of c, d, and e is zero.

Preferably, the compound of formula (C) is 4,4'-difluorobenzophenone (DFBP). Preferably, the compound of formula (D) is hydroquinone. Preferably, the compound of formula (E) is 2,2'-biphenol. In some embodiments, the compound of formula (C) is 4,4'-difluorobenzophenone (DFBP), the compound of formula (D) is hydroquinone, and the compound of formula (E) is 2,2'-biphenol.

The method of the present invention is conducted in a solvent comprising diphenysulfone. In some embodiments, the solvent comprises at least 50 wt.% of diphenylsulfone, based on the total weight of solvent in the reaction mixture, for example at least 60 wt.%, at least 70 wt.%, at least 80 wt.%, at least 90 wt.%, at least 95 wt.% or at least 98 wt.%, based on the total weight of solvent in the reaction mixture. In some embodiments, the solvent consists essentially in diphenylsulfone. In the method of the present invention, a solvent comprising limited amounts of impurities, as detailed in U.S. Patent No. 9,133,111 is generally used.

The solvent of the present invention may comprise benzophenone and/or dibenzothiophene dioxide.

The method of the present invention is conducted in the presence of a base, for example selected from the group consisting of potassium carbonate ($K_2CO_3$), potassium bicarbonate ($KHCO_3$), sodium carbonate ($Na_2CO_3$), cesium carbonate ($Cs_2CO_3$), potassium phosphate ($K_3PO_4$) and sodium bicarbonate ($NaHCO_3$). The base acts to deprotonate the components (D) and (E) during the condensation reaction. The condensation is preferably carried out in the presence potassium carbonate ($K_2CO_3$), sodium carbonate ($Na_2CO_3$) or a mixture of both, most preferably a mixture of both.

The method of the invention preferably may comprise a step of terminating the (poly)condensation reaction by addition of a terminating agent, so as to obtain a product mixture.

Terminating agents may include compounds which terminate chain growth by being incorporated in the polymer backbone via a condensation reaction (also referred to as end-capping agents) and compounds which terminate chain growth without being incorporated in the polymer backbone through a condensation reaction.

According to a preferred embodiment, the (poly)condensation reaction is carried out in the presence of an end-capping agent (F) in the initial mixture or with a slight excess of difluoro-compound of formula (C), that is to say that the molar ratio ((C)+(F))/((D)+(E)) is ≥ 1.000, preferably ≥ 1.003, more preferably ≥ 1.006, even more preferably ≥ 1.010,

and each c, d, and e is independently selected from the group consisting of integers ranging from 0 to 4, in a polar organic solvent in the presence of a base, such as, for example, $Na_2CO_3$, $K_2CO_3$, or a combination thereof. Preferably each of c, d, and e is zero.

End-capping agents used in the method of the present invention notably include those represented by formula (F) below:

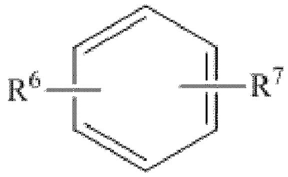

wherein

- $R^6$ is F, Cl, or OH,
- $R^7$ is C(O)-Ar-$R^{10}$, O-Ar-$R^{10}$, $SO_2$-Ar-$R^{10}$, Ar-$R^{10}$, an alkyl (e.g. a C1-C10 alkyl or a C1-C5 alkyl) or H, with Ar being an arylene group comprising at least one benzene ring (i.e. one benzene ring or several benzene rings), and
- $R^{10}$ is F, Cl or H.

Preferably, $R^7$ is C(O)-Ar-$R^{10}$, Ar-$R^{10}$ or H with $R^{10}$ is F or H. More preferably, $R^{10}$ is F.

Preferably, $R^6$ is F or OH. More preferably, $R^6$ is F.

$R^6$ and $R^7$ may be 1,2- or ortho-substitution on the phenylene cycle of formula (F) or they may be 1,3- or meta-substitution on the phenylene cycle. Alternatively, $R^6$ and $R^7$ may preferably be 1,4- or para-substitution on the phenylene cycle of formula (F).

In some embodiments, the end-capping agent is selected from the group consisting of 4,4'-difluorobenzophenone, phenol, 4-phenoxyphenol, 4-phenylphenol, 4-fluorobenzophenone, 3-fluorobenzophenone, 2-fluorobenzophenone, 4,4'-dichlorodiphenylsulfone, 4,4'difluorodiphenylsulfone and a mixture thereof.

Difluoro-compounds and monofunctional phenols are preferably used as end-capping agents. In some embodiments, the end-capping agent is an excess of a difluoro-compound monomer. The end-capping agent used in the method of the present invention is preferably 4,4'-difluorobenzophenone, phenol, 4-phenylphenol or 4-phenoxyphenol.

Lithium chloride is one example of a terminating agent, which will terminate the reaction without being incorporated in the polymer backbone through condensation.

In some embodiments, the reaction is terminating with at least one end-capping agent and with at least one terminating agent other than an end-capping agent. Preferably, 4,4'-difluorobenzophenone and lithium chloride are respectively used as end-capping agent and terminating agent in the method of the present invention.

In some embodiments, the step consisting in terminating the reaction comprises:

- adding a first end capping agent in the reaction mixture and
- adding a terminating agent in the reaction mixture, and
- optionally adding a second end capping agent in the reaction mixture, the second end capping agent being preferably identical to the first end capping agent.

In some other embodiments, the step consisting in terminating the reaction comprises :

- in a first step, adding 4,4'-difluorobenzophenone (DFBP) in the reaction mixture,
- in a second step, adding lithium chloride (LiCl) in the reaction mixture, and
- optionally in a third step adding 4,4'-difluorobenzophenone (DFBP) or lithium chloride (LiCl) in the reaction mixture, preferably 4,4'-difluorobenzophenone (DFBP).

In some embodiments, the at least one end-capping agent is added to the reaction mixture at the beginning of the reaction.

In some embodiments, the concentration of the monomers [(C)+(D)+(E)+(F)] in the diphenylsulfone is at least 15 wt.%, preferably at least 20 wt.%, more preferably at least 25 wt.%.

In some embodiments, the concentration of the monomers [(C)+(D)+(E)+(F)] in the diphenylsulfone is at most 44 wt.%, preferably at most 40 wt.%, more preferably at most 38 wt.%.

In some embodiments, the temperature of the reaction mixture is kept at a temperature of at least 130°C, preferably at least 140°C, more preferably at least 150°C, for about 0.5 to 15 hours.

It is also preferable that the compounds (C), (D) and (E) are heated in the method of the invention at a first temperature of at least 130°C, preferably at least 140°C, more preferably at least 150°C before being contacted with the base, preferably $Na_2CO_3$ and/or $K_2CO_3$. The reaction mixture is then heated at a temperature of at least 290°C, preferably at least 310°C, at a temperature ramp rate of less than 5°C/minute, preferably less than 3°C/minute and/or at a temperature ramp rate of more than 0.1°C/minute. As described in the Examples, once the final target temperature is attained, the reaction is generally continued for a limited time at this temperature, before being terminated.
The reaction mixture is polycondensed, within the temperature range, until the requisite degree of condensation is reached. The polycondensation time can be from 0.1 to 10 hours, preferably from 0.2 to 4 or from 0.5 to 3 hours, depending on the nature of the starting monomers and on the selected reaction conditions.
The method of the invention preferably further comprises a step of isolating the PEEK-PEoDEK copolymer by:

(a) cooling the product mixture to a temperature below 120°C;
(b) contacting the solid phase comprising the PEEK-PEoDEK copolymer with a solvent having a normal boiling point of less than 100°C at a temperature between 15 to 100°C and separating the residual solid from said solvent; and
(c) contacting the solid phase comprising the PEEK-PEoDEK copolymer with water at a temperature between 15 to 100°C, preferably between 15 to 40°C, and separating the residual solid from said water.

In some embodiments, the powder is dried at a temperature of at least 95°C, for example at least 100°C, for at least one hour, for example at least 2 hours, at least 5 hours, at least 10 hours or 12 hours.
In some embodiments, the solvent having a so-called "normal boiling point" (i.e. boiling point under 1 atmosphere) of less than 100°C is selected from the group consisting of acetone, methyl ethyl ketone, ethanol, methanol, isopropanol, and mixture thereof.

**The Polymer Composition**

The PEEK-PEoDEK copolymer can be desirably incorporated into polymer compositions. The polymer composition includes the PEEK-PEoDEK copolymer and at least one of a reinforcing filler, as described below, or at least one additive, different from the reinforcing filler as described below, or a combination thereof. The polymer composition comprises at least 10 wt. %, at least 20 wt. %, at least 30 wt. % of the polymer composition, based on the total weight of the polymer composition. In some embodiments, the polymer composition comprises PEEK-PEoDEK copolymer represents at least 50 wt. %, preferably at least 60 wt. %, at least 70 wt. %, at least 80 wt. %, at least 90 wt. %, at least 95 wt. %, at least 99 wt. % of the PEEK-PEoDEK copolymer, based on the total weight of the polymer composition. In some embodiments, the polymer composition comprises less than 50 wt. %, preferably less than 45 wt. %, more preferably less than 40 wt. % of the PEEK-PEoDEK copolymer, based on the total weight of the polymer composition.

**Reinforcing Fillers**

In some embodiments, the polymer composition includes at least one reinforcing filler. Reinforcing fillers are well known to those of skill in the art. They are preferably selected from fibrous and particulate fillers different from the pigments as described below. More preferably, the reinforcing filler is selected from mineral fillers (such as talc, mica, kaolin, calcium carbonate, calcium silicate, magnesium carbonate, boron nitride), glass fiber, carbon fibers, synthetic polymeric fiber, aramid fiber, aluminum fiber, titanium fiber, magnesium fiber, boron carbide fibers, boron nitride fibers, rock wool fiber, steel fiber, wollastonite, etc. Nano-scale reinforcing fillers can also be used. These fillers include : single and multi-wall carbon nanotubes, carbon nanofibers, graphene, graphene oxide, and nanoclays such as montmorillonite. Still more preferably, it is selected from mica, kaolin, calcium silicate, magnesium carbonate, glass fiber, carbon fibers and wollastonite.
Preferably, the filler is chosen from fibrous fillers. A particular class of fibrous fillers consists of whiskers, i.e. single crystal fibers made from various raw materials, such as $Al_2O_3$, SiC, BC, Fe and Ni.
In one embodiment of the present invention the reinforcing filler is chosen from wollastonite and glass fiber. Among fibrous fillers, glass fibers are preferred; they include chopped strand A-, E-, C-, D-, S-, T- and R-glass fibers, as described in chapter 5.2.3, p. 43-48 of Additives for Plastics Handbook, 2nd edition, John Murphy.
Glass fibers optionally comprised in polymer composition may have a circular cross-section or a non-circular cross-section (such as an oval or rectangular cross-section).
When the glass fibers used have a circular cross-section, they preferably have an average glass fiber diameter of 3 to 30 $\mu$m and particularly preferred of 5 to 12 $\mu$m. Different sorts of glass fibers with a circular cross-section are available on the market depending on the type of the glass they are made of. One may notably cite glass fibers made from E- or S-glass.
In some embodiments, the glass fiber is standard E-glass material with a non-circular cross section. In some

aspects, the polymer composition includes S-glass fibers with a round cross-section.

In some embodiments, the polymer composition includes at least one carbon fiber. As used herein, the term "carbon fiber" is intended to include graphitized, partially graphitized, and ungraphitized carbon reinforcing fibers or a mixture thereof. The carbon fibers can be obtained by heat treatment and pyrolysis of different polymer precursors such as, for example, rayon, polyacrylonitrile (PAN), aromatic polyamide or phenolic resin; carbon fibers may also be obtained from pitchy materials. The term "graphite fiber" is intended to denote carbon fibers obtained by high temperature pyrolysis (over 2000°C) of carbon fibers, wherein the carbon atoms place in a way similar to the graphite structure. The carbon fibers are preferably chosen from the group consisting of PAN-based carbon fibers, pitch based carbon fibers, graphite fibers, and mixtures thereof.

The reinforcing fibers may be organic or inorganic. Suitable fibers for use as the reinforcing fiber component include, for example, carbon fibers, graphite fibers, glass fibers, such as E glass fibers, ceramic fibers, such as silicon carbide fibers, synthetic polymer fibers, such as aromatic polyamide fibers, polyimide fibers and polybenzoxazole fibers. The areal weight of a single layer or cross section of such fibers can vary, for example, from 50 to 600 g/$m^2$.

In some embodiments, the fibers comprise carbon fibers, glass fibers, or both carbon fibers and glass fibers. In some embodiments, the fibers comprise carbon fibers, including, for example, carbon fibers that exhibit a tensile strength of greater than or equal to 3.5 GigaPascals ("GPa") and a tensile modulus of greater than or equal to 200 GPa, as measured by ASTM D638.

The fibers may be in the form of whiskers, short fibers, continuous fibers, sheets, plies, and combinations thereof. Continuous fibers may further adopt any of unidirectional, multidimensional, non-woven, woven, knitted, stitched, wound, and braided configurations, as well as swirl mat, felt mat, and chopped mat structures. The fiber tows may be held in position in such configurations by cross-tow stitches, weft-insertion knitting stitches, or a small amount of resin, such as a sizing. As used herein "continuous fibers" are fibers having a length greater than 10 mm.

In some embodiments, the polymer composition comprises less than 60 wt. %, more preferably less than 50 wt. %, even more preferably less than 45 wt. %, most preferably less than 35 wt. % of reinforcing filler, based on the total weight of the polymer composition.

In some embodiments, the polymer composition comprises at least 10 wt. %, preferably at least 20 wt. %, preferably at least 25 %, most preferably at least 30 wt. % of reinforcing filler, based on the total weight of the polymer composition.

## Additives

In some embodiments, the polymer composition comprises at least one additive different from the reinforcing filler and from the PEEK-PEoDEK copolymer, as above detailed, generally selected from the group consisting of (i) colorants such as a dye (ii) pigments such as titanium dioxide, zinc sulfide and zinc oxide (iii) light stabilizers, e.g. UV stabilizers (iv) heat stabilizers (v) antioxidants such as organic phosphites and phosphonites, (vi) acid scavengers (vii) processing aids (viii) nucleating agents (ix) internal lubricants and/or external lubricants (x) flame retardants (xi) smoke-suppressing agents (x) anti-static agents (xi) anti-blocking agents (xii) conductivity additives such as carbon black and carbon nanofibrils (xiii) plasticizers (xiv) flow modifiers (xv) extenders, and (xvi) metal deactivators.

In some embodiments, the polymer composition includes less than 20 %, preferably less than 10 %, more preferably less than 5 % and even more preferably less than 2 % of additives.

In some embodiments, the polymer composition comprises as an additive 40 wt. % or less of at least one poly(aryl ether sulfone) (PAES) selected from the group consisting of a polysulfone (PSU), a polyphenylsulfone (PPSU), and a poly(ether sulfone) (PES), based on total weight of the polymer composition.

In alternative embodiments, the PEEK-PEoDEK copolymer, as above detailed, is the only polymeric component in the polymer composition. As used herein, the expression "polymeric component" means a compound having repeat units and a molecular weight of at least 2,000 g/mol. In some embodiments, the polymer composition includes less than 3 wt. %, 2 wt. %, 1 wt. %, 0.5 wt. % of a polymeric component other than the PEEK-PEoDEK copolymer.

## Methods of Making the Polymer Composition

The polymer composition can be prepared by a variety of methods involving intimate admixing of the components of the polymer composition, for example by dry blending, suspension or slurry mixing, solution mixing, melt mixing or a combination of dry blending and melt mixing. As used herein, the "components of the polymer composition" includes the PEEK-PEoDEK copolymer, as above detailed, and at least one of the at least one reinforcing filler, the at least one additive, and of a combination thereof.

Typically, the dry blending of the components of the polymer composition is carried out by using high intensity mixers, such as Henschel-type mixers, paddle mixers or ribbon mixers to obtain the polymer composition as a physical mixture.

Alternatively, the intimate admixing of the components of the polymer composition is carried out by tumble blending based on a single axis or multi-axis rotating mechanism to obtain a physical mixture.

Alternatively, the slurry mixing of the components of the polymer composition is carried out by slurrying the components of the polymer composition using an agitator in an appropriate liquid, such as, for example, methanol, followed by filtering the liquid away, to obtain a powder mixture of the components of the polymer composition.

The solution mixing of the components of the polymer composition can be carried out by mixing the components with an agitator in at least one solvent such as, for example, diphenylsulfone, benzophenone, 4-chlorophenol, 2-chlorophenol, or meta-cresol.

In some embodiments, the method of making the polymer composition includes melt compounding the physical mixture. Conventional melt compounding devices, such as corotating and counter-rotating extruders, single screw extruders, co-kneaders, disc-pack processors and various other types of extrusion equipment can be used. Preferably, extruders, more preferably twin screw extruders can be used.

In some embodiments, the physical mixture is compounded in an extruder and then chopped into pellets or granules. The granules or pellets can then be further processed to manufacture additional shaped articles.

**Shaped Articles and Methods of Making**

Exemplary embodiments also include shaped articles comprising the above-described polymer composition and methods of making the shaped articles.

The shaped article can include one or more parts. When the shaped article is a single part, the single part preferably consists of the polymer composition.

Alternatively, the shaped article may consist of more than one part, one or more of which preferably consists of the polymer composition. When more than one part of the shaped article includes the polymer composition, each part may include the same polymer composition or a different polymer composition as described herein.

The weight of the polymer composition, based on the total weight of shaped article, is preferably greater than 1 %, greater than 5 %, greater than 10 %, preferably greater than 15 %, greater than 20 %, greater than 30 %, greater than 40 %, greater than 50 %, greater than 60 %, greater than 70 %, greater than 80 %, greater than 90 %, greater than 95 %, greater than 99 %.

The polymer composition may be well suited for the manufacture of articles useful in a wide variety of applications. For example, the surprising and advantageous properties of the PEEK-PEoDEK copolymer described herein makes the polymer composition especially suitable for use in automotive applications such as magnet wire coatings in hybrid and electric vehicles, oil and gas applications such as downhole cable coatings, structural components for mobile electronic devices (e.g., framework or housing), thermoplastic composites for structural and transportation applications, electrostatic powder coatings on metal substrates for corrosion protection and abrasion resistance, and parts produced by additive manufacturing for a wide range of applications.

The term "mobile electronic device" is intended to denote any electronic device that is designed to be conveniently transported and used in various locations while exchanging/providing access to data, e.g. through wireless connections or mobile network connection. Representative examples of mobile electronic devices include mobile phones, personal digital assistants, laptop computers, tablet computers, radios, cameras and camera accessories, watches, calculators, music players, global positioning system receivers, portable games, hard drives and other electronic storage devices, and the like.

The shaped article may be selected from a large list of articles such as fitting parts; such as seals, in particular sealing rings, preferably backup seal rings, fasteners and the like; snap fit parts; mutually moveable parts; functional elements, operating elements; tracking elements; adjustment elements; carrier elements; frame elements; films; switches; connectors; wires, cables; bearings, housings, compressor components such as compressor valves and compressor plates, shafts, shells, or pistons.

In particular, the polymer composition is very well suited for use as a coating for wires or cables, as a structural part of a mobile electronic devices, or as a part produced by additive manufacturing. Thus, exemplary embodiments also include shaped articles made, at least in part, by the additive manufacturing methods described below using the polymer composition described above. Such shaped articles can be used in a variety of final applications such as implantable medical devices, dental prostheses, and brackets and complex shaped parts in the aerospace and automotive industries.

In particular, the polymer composition is well-suited for use as continuous fiber reinforced composite.

**Methods of Making the Shaped Articles**

The shaped articles described herein can be made from the polymer composition by injection molding, extrusion molding, compression molding, additive manufacturing (also called three-dimensional (3D) printing, for which the shaped

articles may also be called 3D objects or 3D parts), continuous fiber impregnation, and continuous fiber composite lamination/consolidation or other shaping technologies.

In some embodiments, the method of making the shaped article or part thereof includes a step of compression molding or injection molding, and subsequent solidification of the polymer composition.

In some embodiments, the method for making the shaped article or shaped article or part thereof includes a step of coating. For example, the polymer composition can be applied to a wire as a coating by any suitable coating method, preferably by extrusion coating around a wire to form a coated wire, preferably a coated magnet wire.

Exemplary embodiments are also directed to methods of making shaped articles by additive manufacturing, where the shaped article is printed from the polymer composition, also called "part material". The methods include printing layers of the shaped article from the polymer composition as described below. The expression "part material" hereby refers to a polymeric composition comprising at least the PEEK-PEoDEK copolymer, and intended to form at least a part of the 3D object. The part material is according to the present invention used as feedstocks to be used for the manufacture of shaped articles, 3D objects or part of 3D objects.

Additive manufacturing systems are used to print or otherwise build a shaped object from a digital representation of the shaped object by one or more additive manufacturing techniques. Examples of commercially available additive manufacturing techniques include extrusion-based techniques, selective laser sintering, powder/binder jetting, electron-beam melting, and stereolithography processes. For each of these techniques, the digital representation of the shaped object is initially sliced into multiple horizontal layers. For each layer, a tool path is then generated, which provides instructions for the particular additive manufacturing system to print the given layer.

For example, in an extrusion-based additive manufacturing system, a shaped article may be printed from a digital representation of the shaped article in a layer-by-layer manner by extruding and adjoining strips of the polymer composition. The polymer composition is extruded through an extrusion tip carried by a print head of the system, and is deposited as a sequence of roads on a platen in an x-y plane. The extruded material fuses to previously deposited material and solidifies as it cools. The position of the print head relative to the substrate is then incremented along a z-axis (perpendicular to the x-y plane), and the process is repeated to form a shaped article resembling the digital representation. An example of an extrusion-based additive manufacturing system is Fused Filament Fabrication (FFF), also known as Fused Deposition Modelling (FDM). Pellet Additive Manufacturing (PAM) is an example of a 3D printing method capable of printing raw materials as pellets.

As another example, in a powder-based additive manufacturing system, a laser is used to locally sinter powder into a solid part. A shaped article is created by sequentially depositing a layer of powder followed by a laser pattern to sinter an image onto that layer. An example of a powder-based additive manufacturing system is Selective Laser Sintering (SLS).

As another example, carbon-fiber composite shaped articles can be prepared using a continuous Fiber-Reinforced Thermosplastic (FRTP) printing method. This method is based on fused-deposition modeling (FDM) and prints a combination of fibers and resin.

The advantageous properties of the polymer composition discussed above make the polymer composition particularly suitable for additive manufacturing applications.

Accordingly, some embodiments include a method of making a shaped article comprising printing layers of the polymer composition to form the shaped article by an extrusion-based additive manufacturing system (for example FFF or PAM), a powder-based additive manufacturing system (for example SLS), or a continuous Fiber-Reinforced Thermosplastic (FRTP) printing method.

In some embodiments, the 3D printing method employs the copolymers as main elements of the part material, which can for example be shaped in the form of filaments or microparticles (with a regular shape such as spheres, or with a complex shape obtained by grinding/milling of pellets), to build a 3D object (e.g. a 3D model, a 3D article or a 3D part). The polymers may also be printed in the form of pellets.

Some embodiments include a filament including the polymer composition. Preferably, the filament is suitable for use in additive manufacturing methods as described above, such as FFF or FDM.

The term "filament" refers to a thread-like object or fiber including the polymer composition. The filament may have a cylindrical or substantially cylindrical geometry, or may have a non-cylindrical geometry, such as a ribbon-shaped filament. The filament may be hollow, or may have a core-shell geometry, with a different polymer composition comprising either the core or the shell.

When the filament has a cylindrical geometry, the diameter of the cross-section of the fiber preferably ranges from 0.5 to 5 mm, preferably from 0.8 to 4 mm, preferably from 1 mm to 3.5 mm. The diameter of the filament can be chosen to feed a specific FFF 3D printer. An example of filament diameter used in FFF processes is about 1.75 mm or about 2.85 mm. The filament is preferably made by extruding the polymer composition.

According to some embodiments, the polymer composition is in the form of microparticles or a powder, for example having an average diameter, also called $d_{50}$, ranging from 1 to 200 $\mu$m, preferably from 10 to 100 $\mu$m, preferably from 20 to 80 $\mu$m as measured by electron microscopy or laser scattering. Preferably, the microparticles, powder or

powdered material are suitable for use in additive manufacturing methods as described above, such as SLS.

Selective laser sintering ("SLS"), one of the available additive manufacturing techniques, uses electromagnetic radiation from a laser to fuse powdered materials into a mass. The laser selectively fuses the powdered material by scanning cross-sections generated from the digital blueprint of the object on the surface of a powder bed. After a cross-section is scanned, the powder bed is lowered by one layer thickness, a new layer of material is applied, and the bed is rescanned. Locally full coalescence of polymer particles in the top powder layer is necessary as well as an adhesion with previous sintered layers. This process is repeated until the object is completed.

In some embodiments, the 3D printing method may comprise a step of depositing successive layers of the powder and a step of selectively sintering each layer prior to deposition of the subsequent layer. According to an embodiment, the step of printing layers comprises selective sintering by means of a high power energy source, for example a high power laser source such as an electromagnetic beam source.

In some embodiments, the powder may be heated before the sintering step to a temperature Tp (°C), close to the melting point (Tm) of the PEEK-PEoDEK copolymer. The preheating of the powder makes it easier for the laser to raise the temperature of the selected regions of layer of unfused powder to the melting point. The laser causes fusion of the powder only in locations specified by the input. Laser energy exposure is typically selected based on the polymer in use and to avoid polymer degradation.

The 3D object/article/part may be built on substrate, for example a horizontal substrate and/or on a planar substrate. The substrate may be moveable in all directions, for example in the horizontal or vertical direction. During the 3D printing process, the substrate can, for example, be lowered, in order for the successive layer of unsintered polymeric material to be sintered on top of the former layer of sintered polymeric material.

According to an embodiment, the 3D printing process further comprises a step consisting in producing a support structure. According to this embodiment, the 3D object/article/part is built upon the support structure and both the support structure and the 3D object/article/part are produced using the same AM method. The support structure may be useful in multiple situations. For example, the support structure may be useful in providing sufficient support to the printed or under-printing, 3D object/article/part, in order to avoid distortion of the shape 3D object/article/part, especially when this 3D object/article/part is not planar. This is particularly true when the temperature used to maintain the printed or under-printing, 3D object/article/part is below the re-solidification temperature of the powder.

The 3D printing method usually takes place using a printer. The SLS printer may comprise a sintering chamber and a powder bed, both maintained at determined at specific temperatures.

FFF 3D printers are, for example, commercially available from Apium, from Roboze, from Hyrel or from Stratasys, Inc. (under the trade name Fortus®). SLS 3D printers are, for example, available from EOS Corporation under the trade name EOSINT® P. FRTP 3D printers are, for example, available from Markforged.

PAM 3D printers are, for example, commercially available from Pollen. BAAM (Big Area Additive Manufacturing) is an industrial sized, additive machine commercially available from Cincinnati Inc.

SLS 3D printers are, for example, available from EOS Corporation under the trade name EOSINT® P.

## Method of Making the PEEK-PEoDEK Composite

Exemplary embodiments are directed to methods of making PEEK-PEoDEK composites comprising impregnating the reinforcing fibers described above with the polymer matrix described herein.

Various methods can be employed by which fibers may be impregnated with the polymer matrix, wherein the matrix is either in molten or particulate form, including, for example, powder coating, film lamination, extrusion, pultrusion, aqueous slurry, and melt impregnation, to form plies in the form of, for example, sheets or tapes of fibers that are at least partially impregnated with the polymer matrix. As used herein, "tape" means a strip of material with longitudinally extending reinforcement fibers that are aligned along a single axis of the strip material.

Plies of matrix impregnated fibers may be placed adjacent one another to form an unconsolidated composite laminate, such as a prepreg. The fiber reinforced layers of the laminate may be positioned with their respective fiber reinforcements in selected orientations relative to one another.

The plies may be stacked, manually or automatically, e.g., by automated tape layup using "pick and place" robotics, or advanced fiber placement wherein pre-impregnated tows of fibers are heated and compacted in a mold or on a mandrel, to form a composite laminate having desired physical dimensions and fiber orientations.

The layers of an unconsolidated laminate are typically not completely fused together and the unconsolidated composite laminate may exhibit a significant void content, e.g., greater than 20% by volume as measured by x-ray microtomography. Heat and/or pressure may be applied, or sonic vibration welding may be used, to stabilize the laminate and prevent the layers from moving relative to one another, e.g., to form a composite material "blank", as an intermediate step to allow handling of the composite laminate prior to consolidation of the composite laminate.

The composite laminate so formed is subsequently consolidated, typically by subjecting the composite laminate to heat and pressure, e.g., in a mold, to form a shaped fiber reinforced thermoplastic matrix composite article. As used

herein, "consolidation" is a process by which the matrix material is softened, the layers of the composite laminate are pressed together, air, moisture, solvents, and other volatiles are pressed out of the laminate, and the adjacent plies of the composite laminate are fused together to form a solid, coherent article. Ideally, the consolidated composite article exhibits minimal, e.g., less than 5% by volume, more typically less than 2% by volume, void content as measured by x-ray microtomography.

The PEEK-PEoDEK composite preferably comprises from 20 to 80 wt.% of reinforcing fibers and from 80 to 20 wt.% of the polymer matrix, based on the weight of the PEEK-PEoDEK composite.

Exemplary embodiments will now be described in the following non-limiting examples.

## EXAMPLES

## EXPERIMENTAL SECTION

### RAW MATERIALS

**KETASPIRE® KT-820P** [MV (410°C, 46 $s^{-1}$) is 1.1 kPa.s, Tm = 340 °C] is an aromatic polyetheretherketone (PEEK) polymer available from Solvay Specialty Polymers USA, LLC.

**Hydroquinone**, photo grade, was procured from Eastman, USA. It contained 0.38 wt% moisture, which amount was used to adapt the charge weights. All weights indicated include moisture.

**Resorcinol**, ACS reagent grade, was procured from Aldrich, USA
**4,4'-Biphenol**, polymer grade, was procured from SI, USA.

**2,2'- Biphenol**, 99%, was procured from Aldrich, USA
**4,4'-Difluorobenzophenone**, polymer grade (99.8%+), was procured from Malwa, India
**Diphenyl sulfone** (DPS), polymer grade, was procured from Proviron (99.8% pure).

**Sodium carbonate**, light soda ash, was procured from Solvay S.A., France.

**Potassium carbonate** with a $d_{90}$ < 45 μm was procured from Armand products.

**Lithium chloride** (LiCl), anhydrous grade, was procured from Acros.

**1,4-bis(4'-fluorobenzoyl)benzene** (1,4-DFDK) and **1,3 bis(4'-fluorobenzoyl)benzene** (1,3-DFDK) were prepared by Friedel-Crafts acylation of fluorobenzene according to Example 1 of U.S. Patent No. 5,300,693 to Gilb et al. (filed November 25, 1992 and incorporated herein by reference in its entirety). Some of the 1,4-DFDK was purified as described in U.S. Patent No. 5,300,693 by recrystallization in chlorobenzene, and some of the 1,4-DFDK was purified by recrystallization in DMSO/ethanol. The 1,4-DFDK purified by recrystallization in DMSO/ethanol was used as the 1,4-DFDK in the polymerization reactions to make PEKK described below, while 1,4-DFDK recrystallized in chlorobenzene was used as precursor for **1,4-bis(4'-hydroxybenzoyl)benzene** (1,4-BHBB).

**1,4-bis(4'-hydroxybenzoyl)benzene** (1,4-BHBB) and **1,3-bis(4'-hydroxybenzoyl)benzene** (1,3-BHBB) were produced by hydrolysis of the 1,4-DFDK, and 1,3-DFDK, respectively, following the procedure described in Example 1 of U.S. Patent No. 5,250,738 to Hackenbruch et al. (filed February 24, 1992 and incorporated herein by reference in its entirety). They were purified by recrystallization in DMF/ethanol.

### Determination of the melting temperature (Tm), glass transition temperature (Tg) and heat of fusion (ΔH)

The melting temperature Tm was determined as the peak temperature of the melting endotherm on the $2^{nd}$ heat scan in differential scanning calorimeter (DSC) according to ASTM D3418-03, E1356-03, E793-06, E794-06. Details of the procedure as used in this invention are as follows: a TA Instruments DSC Q20 was used with nitrogen as carrier gas (99.998% purity, 50 mL/min). Temperature and heat flow calibrations were done using indium. Sample size was 5 to 7 mg. The weight was recorded ±0.01 mg. The heat cycles were:

- 1st heat cycle: 30.00°C to 400.00°C at 20.00°C/min, isothermal at 400.00°C for 1 min;
- 1st cool cycle: 400.00°C to 30.00°C at 20.00°C/min, isothermal for 1 min;

2nd heat cycle: 30.00°C to 400.00°C at 20.00°C/min, isothermal at 400.00°C for 1 min.

The melting temperature Tm was determined as the peak temperature of the melting endotherm on the 2nd heat scan. The enthalpy of fusion was determined on the 2nd heat scan.

The melting of the composition was taken as the area over a linear baseline drawn from 220°C to a temperature above the last endotherm .

The glass transition temperature Tg (mid-point) was determined on the $2^{nd}$ heat scan according to ASTM D3418-03, E1356-03, E793-06, E794-06.

**Determination of the melt viscosity (MV)**

The melt viscosity was measured using a capillary rheometer according to ASTM D3835. Readings were taken at 410 °C and a shear rate of 46.3 s-1 using a die with the following characteristics : diameter = 1.016 mm, length = 20.32 mm, cone angle = 120°.

**Determination of tensile properties**

A 762 mm x 762 mm x 3.2 mm plaque was prepared from the polymer by compression molding of 30 g of polymer under the following conditions:

- preheat at $T_1$,
- $T_1$ /20 minutes, 2000 kg-f
- $T_1$ /2 minutes, 2700 kg-f
- cool down to 30 °C over 40 minutes, 2000 kg-f

$T_1$ values used for the polymers are indicated in the results table.
The plaques were then annealed at 200 °C for 3 hours.
The 762 mm x 762 mm x 3.2 mm compression molded plaques were machined into Type V ASTM tensile specimens and these specimens of the various polymer compositions were subjected to tensile testing according to ASTM method D638 at 0.05 inch/minute room temperature (i.e. 23°C) on 3 specimens. The average of the 3 specimens is presented.

**Determination of Dielectric Constant and Dissipation Factor at 1 kHz and 1 MHz**

Using the compression molded plaque prepared as described above, the dielectric constant and dissipation factor were measured at 1 kHz and 1 MHz. using the guidelines of ASTM D150. Prior to testing the sample was wiped with isopropanol to remove any residue and conditioned at T = 23 ± 2 °C and RH = 50 ± 10 % for 40+ hours. Hewlett-Packard 4284A Precision LCR meter and Agilent 16451B Dielectric Test Fixture with Plastics Technical Center software were used. The dielectric constant (ε) and dissipation factor were measured at 1,000 Hz and 1,000,000 Hz. The test method was a parallel plate method with a gap (three terminal method), which involves placing a material between the electrodes to create a capacitor. The dielectric constant and dissipation factors were calculated from the results of two C-D (capacitance (C) and dissipation factor ($D_t$ = tan (δ)) measurements using DC voltage source. At first, the sample was placed between two metallic plates and impedance was measured. A second run was measured without the specimen between the two electrodes. The test software calculates the dielectric constant by using the impedance to find the components of capacitance and dissipation. When those two variables are determined, the software calculates the permittivity (dielectric constant) and loss values (dissipation factor). Three specimens were run for each sample and an average of three measurements was reported as well as standard deviation. The following equations were used to derive the dielectric constant and dissipation factor applicable to this method:

$$\epsilon_r = \frac{1}{1 - \left(1 - \frac{C_{s1}}{C_{s2}}\right) \times \frac{t_g}{t_a}}$$

$$D_t = D_2 + \epsilon_r \times (D_2 - D_1) \times \left(\frac{t_g}{t_a} - 1\right)$$

Where, $D_t^2 << 1$

$\varepsilon_r$ : Dielectric constant of MUT

$D_t$ : Dissipation factor of MUT

Parameters Needed:

$C_{s1}$ : Capacitance wothout MUT inserted [F]
$D_1$ : Dissipation factor wothout MUT inserted
$t_g$ : Gap between Guarded/Guard electrode and Unguarded electrode [m]
$C_{s2}$ : Capacitance with MUT inserted [F]
$D_2$ : Dissipation factor with MUT inserted
$t_a$ : Average thickness of MUT [m]

**Determination of dielectric properties at 2.4 GHz**

Using the compression molded plaque prepared as described above, the dielectric constant and dissipation factor were measured at 1 kHz, 1 MHz and 2.4 GHz. using the guidelines of ASTM D2520, Method B - Resonant Cavity Perturbation Technique. One (1) replicate of each material was prepared for measurement. Each test sample consisted of one piece of material 0.08 in x 0.20 in x 1.0 in.

**SYNTHESIS EXAMPLES**

**Comparative Example 1: PEEK KetaSpire® 820P**

**Comparative Example 2: PEKK with 60/40 T/I ratio (2017-33-E2)**

In a 500 mL 4-neck reaction flask fitted with a stirrer, a $N_2$ inlet tube, a Claisen adapter with a thermocouple plunging in the reaction medium, and a Dean-Stark trap with a condenser and a dry ice trap were introduced 112.50 g of diphenyl sulfone, 33.390 g of 1,3-BHBB, 6.372 g of 1,4-BHBB and 41.051 g of 1,4-DFDK. The flask content was evacuated under vacuum and then filled with high purity nitrogen (containing less than 10 ppm O2). The reaction mixture was then placed under a constant nitrogen purge (60 mL/min).

The reaction mixture was heated slowly to 270 °C. At 270 °C, 13.725 g of $Na_2CO_3$ and 0.086 g of $K_2CO_3$ was added via a powder dispenser to the reaction mixture over 60 minutes. At the end of the addition, the reaction mixture was heated to 320 °C at 1 °C/minute. After 2 minutes at 320 °C, 1.207 g of 1,4-DFDK were added to the reaction mixture while keeping a nitrogen purge on the reactor. After 5 minutes, 0.529 g of lithium chloride were added to the reaction mixture. 10 minutes later, another 0.503 g of 1,4-DFDK were added to the reactor and the reaction mixture was kept at temperature for 15 minutes. Another charge of 25 g of diphenyl sulfone was added to the reaction mixture, which was kept under agitation for 15 minutes. The reactor content was then poured from the reactor into a stainless steel pan and cooled. The solid was broken up and ground in an attrition mill through a 2 mm screen. Diphenyl sulfone and salts were extracted from the mixture with acetone and water at pH between 1 and 12. 0.67 g of $NaH_2PO_4 \cdot 2H_2O$ and 0.62 g of $Na_2HPO_4$ were dissolved in 1200 mL DI water for the last wash. The powder was then removed from the reactor and dried at 120 °C under vacuum for 12 hours yielding 72 g of a yellow powder.

**Comparative Example 3: preparation of PEEK-PEDEK copolymer 75/25 (2018-78-E1)**

In a 500 mL 4-neck reaction flask fitted with a stirrer, a $N_2$ inlet tube, a Claisen adapter with a thermocouple plunging in the reaction medium, and a Dean-Stark trap with a condenser and a dry ice trap were introduced 128.21 g of diphenyl sulfone, 20.297 g of hydroquinone, 11.411 g of 4,4'-biphenol and 54.377 g of 4,4'-difluorobenzophenone. The flask content was evacuated under vacuum and then filled with high purity nitrogen (containing less than 10 ppm $O_2$). The reaction mixture was then placed under a constant nitrogen purge (60 mL/min).

The reaction mixture was heated slowly to 150 °C. At 150 °C, a mixture of 26.955 g of $Na_2CO_3$ and 0.169 g of $K_2CO_3$ was added via a powder dispenser to the reaction mixture over 30 minutes. At the end of the addition, the reaction mixture was heated to 320 °C at 1°C/minute. After 13 minutes at 320 °C, 3.742 g of 4,4'-difluorobenzophenone were added to the reaction mixture while keeping a nitrogen purge on the reactor. After 5 minutes, 1.039 g of lithium chloride were added to the reaction mixture. 10 minutes later, another 2.138 g of 4,4'-difluorobenzophenone were added to the reactor and the reaction mixture was kept at temperature for 15 minutes.

The reactor content was then poured from the reactor into a SS pan and cooled. The solid was broken up and ground in an attrition mill through a 2 mm screen. Diphenyl sulfone and salts were extracted from the mixture with acetone and water at pH between 1 and 12. The powder was then removed from the reactor and dried at 120 °C under vacuum for 12 hours yielding 74 g of a white powder.

The repeat unit of the polymer is:

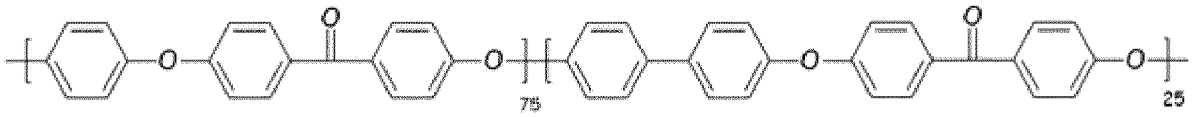

The melt viscosity measured by capillary rheology at 410 °C, 46 $s^{-1}$ was 0.28 kN-s/$m^2$.
The properties of the final polymer are detailed in Table 4.

**Comparative Example 4: preparation of PEEK-PEDEK copolymer 80/20 (2017-07-E1)**

The same procedure as comparative example 1 was followed but with the following reagents amounts:

**Table 1**

| Reagent | Wt (g) |
|---|---|
| Diphenyl sulfone | 128.21 |
| Hydro quinone | 21.933 |
| 4,4'-biphenol | 9.244 |
| 4,4'-difluorobenzophenone | 55.054 |
| $Na_2CO_3$ | 27.294 |
| $K_2CO_3$ | 0.171 |
| Time at 320 °C | 11 minutes |
| 4,4'-difluorobenzophenone in first termination | 3.789 |
| Lithium chloride in second termination | 1.052 |
| 4,4'-difluorobenzophenone in third termination | 2.165 |

The melt viscosity measured by capillary rheology at 410 °C, 46 $s^{-1}$ was 0.16 kN-s/$m^2$.
The properties of the final polymer are detailed in Table 4.

**Comparative Example 6: preparation of PEEK-PEmEK copolymer 80/20 (2018-73-E1)**

In a 1000 mL 4-neck reaction flask fitted with a stirrer, a N2 inlet tube, a Claisen adapter with a thermocouple plunging in the reaction medium, and a Dean-Stark trap with a condenser and a dry ice trap were introduced 330.00 g of diphenyl sulfone, 52.106 g of hydroquinone, 13.002 g of resorcinol and 132.00 g of 4,4'-difluorobenzophenone. The flask content was evacuated under vacuum and then filled with high purity nitrogen (containing less than 10 ppm O2). The reaction mixture was then placed under a constant nitrogen purge (60 mL/min).
The reaction mixture was heated slowly to 150 °C. At 150 °C, a mixture of 64.995 g of $Na_2CO_3$ and 0.244 g of $K_2CO_3$ was added via a powder dispenser to the reaction mixture over 30 minutes. At the end of the addition, the reaction mixture was heated to 300 °C at 1°C/minute. After 32 minutes at 300 °C, 20.586 g of 4,4'-difluorobenzophenone were added to the reaction mixture while keeping a nitrogen purge on the reactor. After 5 minutes, 2.500 g of lithium chloride were added to the reaction mixture. 10 minutes later, another 5.146 g of 4,4'-difluorobenzophenone were added to the reactor and the reaction mixture was kept at temperature for 15 minutes.
The reactor content was then poured from the reactor into a SS pan and cooled. The solid was broken up and ground in an attrition mill through a 2 mm screen. Diphenyl sulfone and salts were extracted from the mixture with acetone and water at pH between 1 and 12. The powder was then removed from the reactor and dried at 100 °C under vacuum for 12 hours yielding 165 g of a light brown powder.
The repeat unit of the polymer is:
The melt viscosity measured by capillary rheolology at 410 °C, 46 $s^{-1}$ was 0.31 kN-s/$m^2$. The properties of the final polymer are detailed in Table 4.

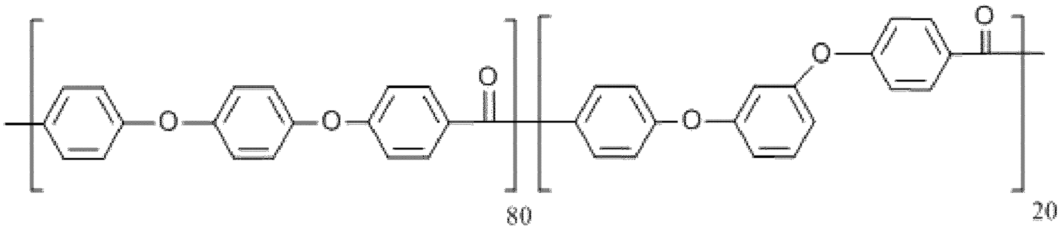

**Comparative Example 5: preparation of PEEK-PEmEK copolymer 75/25 (2018-57-E1)**

The same procedure as comparative example 6 was followed with the reagents amounts as detailed in Table 2. The properties of the resulting copolymer are in Table 4.

**Table 2**

| Reagent | Units | E5 |
|---|---|---|
| PEEK/PEmEK | | 75/25 |
| DPS | g | 330.17 |
| Hydroquinone | g | 40.660 |
| pyrocatechol | g | 13.528 |
| 4,4'-DFBP | g | 109.875 |
| $Na_2CO_3$ | g | 54.153 |
| $K_2CO_3$ | g | 0.170 |
| Time at 300 °C | minutes | 52 |
| 4,4'-DFBP in first termination | g | 7.496 |
| LiCl in second termination | g | 2.081 |
| 4,4'-DFBP in third termination | g | 4.284 |
| Polymer weight | g | 127 |

**Example 7: preparation of PEEK-PEoDEK copolymer 80/20 (60066-190)**

In a 500 mL 4-neck reaction flask fitted with a stirrer, a N2 inlet tube, a Claisen adapter with a thermocouple plunging in the reaction medium, and a Dean-Stark trap with a condenser and a dry ice trap were introduced 144.94 g of diphenyl sulfone, 21.737 g of hydroquinone, 9.162 g of 2,2'-biphenol and 54.053 g of 4,4'-difluorobenzophenone. The flask content was evacuated under vacuum and then filled with high purity nitrogen (containing less than 10 ppm O2). The reaction mixture was then placed under a constant nitrogen purge (60 mL/min).

The reaction mixture was heated slowly to 150 °C. At 150 °C, a mixture of 26.986 g of $Na_2CO_3$ and 0.170 g of $K_2CO_3$ was added via a powder dispenser to the reaction mixture over 30 minutes. At the end of the addition, the reaction mixture was heated to 340 °C at 1°C/minute. After 120 minutes at 340 °C, the reaction was terminated in 3 stages : 6.441 g of 4,4'-difluorobenzophenone were added to the reaction mixture while keeping a nitrogen purge on the reactor. After 5 minutes, 0.489 g of lithium chloride were added to the reaction mixture. 10 minutes later, another 2.147g of 4,4'-difluorobenzophenone were added to the reactor and the reaction mixture was kept at temperature for 15 minutes.

The reactor content was then poured from the reactor into a SS pan and cooled. The solid was broken up and ground in an attrition mill through a 2 mm screen. Diphenyl sulfone and salts were extracted from the mixture with acetone and water at pH between 1 and 12. The powder was then removed from the reactor and dried at 120 °C under vacuum for 12 hours yielding 66 g of a white powder.

The repeat unit of the polymer is:

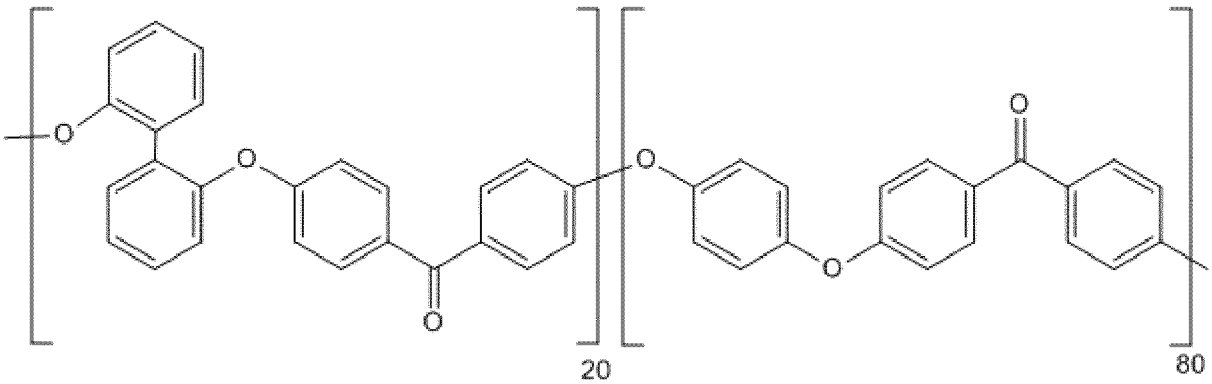

The melt viscosity measured by capillary rheology at 410 °C, 46 s-1 was 2.45 kN-s/$m^2$. Properties of the polymer are detailed in Table 4.

**Example 8-11: preparation of PEEK-PEoDEK copolymer 80/20 (60117-40), 75/25 60066-157, 60096-40) and 70/30 (60066-181)**

The same procedure as example 8 was followed with the reagents amounts as detailed in Table 3. Properties of the copolymers are detailed in Table 4.

**Table 3**

| Reagent | Units | E8 | E9 | E10 | E11 |
|---|---|---|---|---|---|
| PEEK/PEoDEK ratio | | 80/20 | 75/25 | 75/25 | 70/30 |
| DPS | g | 362.36 | 168.96 | 146.76 | 180.38 |
| Hydro quinone | g | 54.342 | 20.378 | 20.378 | 19.020 |
| 2,2'-biphenol | g | 22.904 | 11.452 | 11.452 | 13.742 |
| 4,4'-DFBP | g | 135.13 | 54.053 | 54.053 | 54.053 |
| $Na_2CO_3$ | g | 67.465 | 26.986 | 26.986 | 26.986 |
| $K_2CO_3$ | g | 0.425 | 0.170 | 0.170 | 0.170 |
| Time at 340 °C | min | 15 | 44 | 2 | 60 |
| 4,4'-DFBP in first termination | g | 16.103 | 6.441 | 6.441 | 6.441 |
| LiCl in second termination | g | 2.622 | 1.049 | 1.049 | 1.049 |
| 4,4'-DFBP in third termination | g | 5.368 | 2.147 | 2.147 | 2.147 |
| MV (410 °C, 46 $s^{-1}$) | kN-s/$m^2$ | 3.74 | 1.76 | 3.08 | 2.83 |

**Table 4** presents the properties of the samples prepared according to the examples.

| Property | Units | CE1 | CE2 | CE3 | CE4 | CE5 | CE6 | E7 | E8 | E9 | E10 | E11 |
|---|---|---|---|---|---|---|---|---|---|---|---|---|
| PAEK unit | | PEEK | PEKK | PEDEK | PEDEK | PEmEK | PEmEK | PEoDEK | PEoDEK | PEoDEK | PEoDEK | PEoDEK |
| PEEK/PAEK ratio (mol/mol) | | 100/0 | | 75/25 | 80/20 | 75/25 | 80/20 | 80/20 | 80/20 | 75/25 | 75/25 | 70/30 |
| MV (410 °C, 46 $s^{-1}$) | kN-s/$m^2$ | 1.1 | 0.58 | 0.28 | 0.16 | 2.14 | 0.31 | 2.45 | 3.74 | 1.76 | 3.08 | 2.83 |
| Tg | °C | 151 | 160 | 153 | 151 | 141 | 135 | 154 | 153 | 154 | 150 | 149 |
| Tm | °C | 340 | 301 | 304 | 312 | 302 | 311 | 305 | 307 | 303 | 296 | 286 |
| Heat fusion | J/g | 50 | 8 | 38 | 41 | 43 | 53 | 33 | 28 | 33 | 18 | 1 |
| $T_1$ molding | °C | 421 | 343 | 343 | 365 | 354 | 377 | 368 | 354 | 332 | 354 | 354 |
| Tensile strength at yield or at break | psi | 13900 | | 11400 @brea k | 13500 | 14000 @ break | 9160@ break | 13800 | 14500 | 9700 @ break | 14100 | 11900 @ break |
| Tensile (Young) modulus | ksi | 561 | | 523 | 522 | 607 | 644 | 539 | 560 | 582 | 535 | 535 |
| Dielectric constant @ 1 kHz | | 3.01 | | 3.00 | 3.10 | 3.13 | 3.06 | 3.21 | 3.26 | 3.16 | 3.24 | 3.10 |
| Dielectric constant @ 1 MHz | | 2.97 | | 2.96 | 3.07 | 3.10 | 3.03 | 3.19 | 3.23 | 3.14 | 3.21 | 3.07 |
| Dielectric constant @ 2.4 GHz | | 3.16 | 3.26 | 3.13 | 3.15 | | 3.15 | 3.14 | | 3.14 | 3.14 | |
| Dissipation factor @ 1 kHz | | 0.0013 | | 0.0011 | 0.0011 | 0.0015 | 0.0010 | 0.0007 | 0.0010 | 0.0005 | 0.0007 | 0.0006 |
| Dissipation factor @ 1 MHz | | 0.0028 | | 0.0023 | 0.0024 | 0.0018 | 0.0017 | 0.0017 | 0.0019 | 0.0018 | 0.0017 | 0.0016 |
| Dissipation factor @ 2.4 GHz | | 0,0026 | 0.0032 | 0.0025 | 0.0025 | | 0.0020 | 0.0024 | | 0.0021 | 0.0023 | |

The data presented in Table 4 show that PEEK-PEoDEK copolymers according to the present invention are low Tm PAEK with the following advantages over the already known low Tm PAEKs:

- Improved dielectric properties over PEKK (higher dielectric constant and lower dissipation factor)
- Increased crystallinity over PEKK for the same Tm as shown by value of heat of fusion
- More consistent processing than PEKK due to the existence of a single crystal form, as can be confirmed by the presence of single Tm in the first heat of the polymer
- Higher Tg than PEEK-PEmEK, hence higher continuous use temperature
- The possibility to reach lower Tm than with PEEK-PEDEK and PEEK-PEmEK (Tm < 300°C).
- Lower dissipation factor @ 1 kHz, @ 1MHz and @ 2.4 GHz

Should the disclosure of any patents, patent applications, and publications which are incorporated herein by reference conflict with the description of the present application to the extent that it may render a term unclear, the present description shall take precedence.

## Claims

**1.** A PEEK-PEoDEK copolymer comprising at least 50 mol. %, collectively, of repeat units ($R_{PEEK}$) and repeat units ($R_{PEoDEK}$), relative to the total number of repeat units in the PEEK-PEoDEK copolymer, wherein :

(a) repeat units ($R_{PEEK}$) are repeat units of formula :

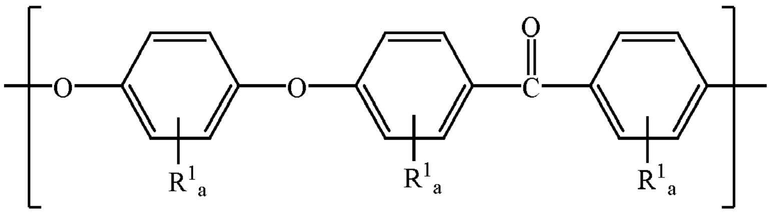

(A),

and

(b) repeat units ($R_{PEoDEK}$) are repeat units of formula (B) :

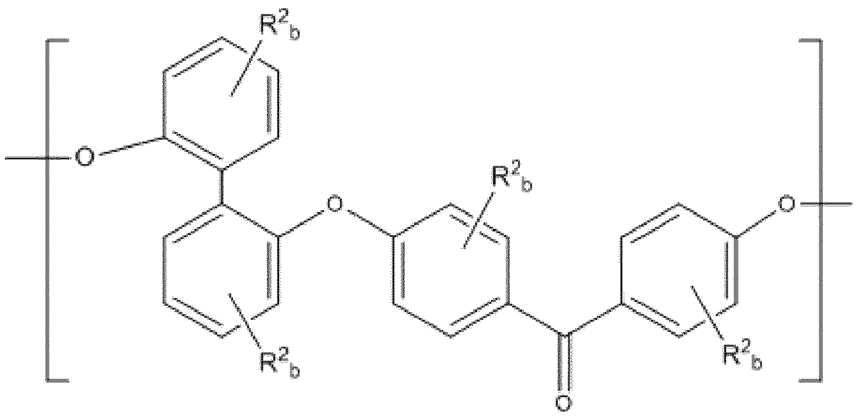

(B),

wherein :

each $R^1$ and $R^2$, equal to or different from each other, is independently at each occurrence selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium,

each a and b is independently selected from the group consisting of integers ranging from 0 to 4, and

the PEEK-PEoDEK copolymer comprises the repeat units $R_{PEEK}$ and $R_{PEoDEK}$ in a molar ratio $R_{PEEK}/R_{PEoDEK}$ ranging from 95/5 to 70/30.

2. The PEEK-PEoDEK copolymer of claim 1, wherein the repeat units ($R_{PEEK}$) are repeat units of formula:

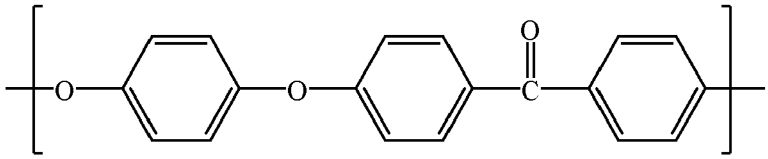

(A-1).

3. The PEEK-PEoDEK copolymer of any one of claims 1 and 2, wherein the repeat units ($R_{PEoDEK}$) are repeat units of formula:

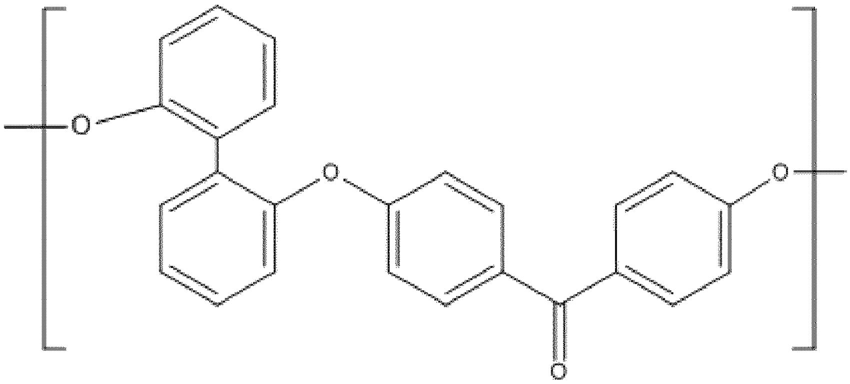

(B-1).

4. The PEEK-PEoDEK copolymer of any one of the preceding claims, In presenting a dissipation factor (Df) at 2.4 GHz of less than 0.0025, as measured according to ASTM D2520 (2.4 GHz).

5. A polymer composition comprising:

(i) the PEEK-PEoDEK copolymer of any one of claims 1 to 4, and
(ii) at least one of a reinforcing filler, an additive, or a combination thereof.

6. The polymer composition of claim 5, wherein the PEEK-PEoDEK copolymer represents at least 10 wt. % of the polymer composition, based on the total weight of the polymer composition.

7. A method of making the PEEK-PEoDEK copolymer of any one of claims 1-4, comprising causing at least one difluoro-compound of formula (C):

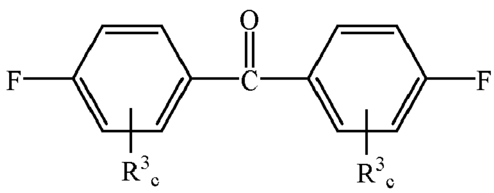

(C)

to react via (poly)condensation with a mixture comprising at least the di-hydroxy compounds of formulas (D) and (E):

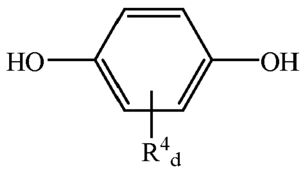

(D)

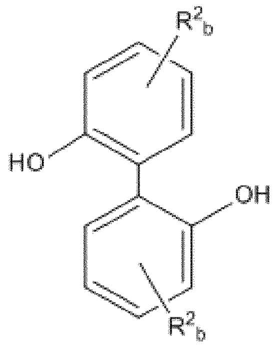

(E)

in a molar ratio (D)/(E) ranging from 95/5 to 70/30,
the mixture optionally further comprising an end-capping agent,
wherein each $R^3$, $R^4$, and $R^5$, equal to or different from each other, is independently at each occurrence selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium, and each c, d, and e is independently selected from the group consisting of integers ranging from 0 to 4,
at a temperature of 150 to 340°C,
in the presence of a base,
in a solvent comprising diphenyl sulfone; and

- optionally terminating the (poly)condensation reaction by addition of a terminating agent, so as to obtain a product mixture.

**8.** The method of claim 7, wherein the compound of formula (C) is 4,4'-difluorobenzophenone (DFBP), the compound of formula (D) is hydroquinone, and/or the compound of formula (E) is 2,2'-biphenol.

**9.** The method of claims 7 or 8, wherein the (poly)condensation reaction is carried out in the presence of an end-capping agent (F) in the initial mixture or with an excess of difluoro-compound of formula (C), such that the molar ratio ((C)+(F))/((D)+(E)) is ≥ 1.000, preferably ≥ 1.003, more preferably ≥ 1.006, even more preferably ≥ 1.010, in a polar organic solvent in the presence of a base.

**10.** The method of any one of claims 7-9, wherein the end-capping agent (F) is according to formula (F) below:

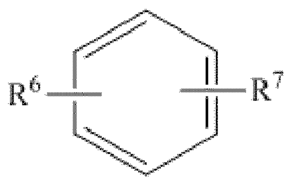

wherein

$R^6$ is F, Cl, or OH,
$R^7$ is C(O)-Ar-$R^{10}$, O-Ar-$R^{10}$, $SO_2$-Ar-$R^{10}$, Ar-$R^{10}$, an alkyl (e.g. a C1-C10 alkyl or a C1-C5 alkyl) or H, with Ar being an arylene group comprising at least one benzene ring (i.e. one benzene ring or several benzene rings), and $R^{10}$ is F, Cl or H.

**11.** A shaped article comprising the PEEK-PEoDEK copolymer of any one of claims 1-4 or the polymer composition of any one of claims 5-6.

**12.** The shaped article of claim 11 being a mobile electronic device article or component, preferably selected from the group consisting of a mobile phone, a personal digital assistant, a laptop computer, a tablet computer, a wearable computing device, a camera, a portable audio player, a portable radio, a global position system receiver, and a portable game console.

**13.** A method of making the shaped article of claims 11 or 12, comprising forming the shaped article by an additive manufacturing process, preferably selected from the group consisting of selective laser sintering and extrusion-based 3D printing processes.

**14.** A polymer-metal junction comprising a metal substrate in contact with the polymer composition of any one of claims 5-6.

**15.** A PEEK-PEoDEK composite, comprising:

- a polymer matrix, and
- reinforcing fillers,

wherein the polymer matrix comprises the PEEK-PEoDEK copolymer of any one of claims 1-4 or the polymer composition of any one of claims 5-6.

Europäisches Patentamt
European Patent Office
Office européen des brevets

# EUROPEAN SEARCH REPORT

Application Number
EP 19 19 2595

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2018/086873 A1 (SOLVAY SPECIALTY POLYMERS USA [US]) 17 May 2018 (2018-05-17) * claim 1; examples 1-6 * ----- | 1-15 | INV. C08G65/40 |
| A | WO 2019/053164 A1 (SOLVAY SPECIALTY POLYMERS USA [US]) 21 March 2019 (2019-03-21) * claim 1; examples 1-5 * ----- | 1-15 | |

TECHNICAL FIELDS SEARCHED (IPC)
C08G

The present search report has been drawn up for all claims

1

| Place of search | Date of completion of the search | Examiner |
|---|---|---|
| The Hague | 3 February 2020 | O'Sullivan, Timothy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 19 19 2595

This annex lists the patent family members relating to the patent documents cited in the above-mentioned European search report. The members are as contained in the European Patent Office EDP file on
The European Patent Office is in no way liable for these particulars which are merely given for the purpose of information.

03-02-2020

| Patent document cited in search report | Publication date | Patent family member(s) | Publication date |
|---|---|---|---|
| WO 2018086873 A1 | 17-05-2018 | NONE | |
| WO 2019053164 A1 | 21-03-2019 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 9133111 B
- US 5300693 A, Gilb
- US 5250738 A, Hackenbruch


### Non-patent literature cited in the description


- **JOHN MURPHY.** Additives for Plastics Handbook. 43-48